# EUROPÄISCHE PATENTSCHRIFT

(11) **EP 3 105 068 B1**
(45) Veröffentlichungstag und Bekanntmachung des Hinweises auf die Patenterteilung: **25.10.2017**
(21) Anmeldenummer: 15703256.6
(22) Anmeldetag: 30.01.2015
(51) Int. Cl.: B60C 23/04, B60C 23/06

(54) **VERFAHREN ZUM ERKENNEN DES AUSBAUENS EINES IN EINEM FAHRZEUG-REIFEN VERBAUTEN REIFENMODULS**
METHOD FOR DETECTING THE REMOVAL OF A TIRE MODULE INSTALLED IN A VEHICLE TIRE
PROCÉDÉ DE DÉTECTION DU DÉMONTAGE D'UN MODULE DE PNEUMATIQUE MONTÉ DANS UN PNEUMATIQUE DE VÉHICULE

(30) Priorität: 14.02.2014 DE 102014202706
(43) Veröffentlichungstag der Anmeldung: 21.12.2016
(73) Patentinhaber: Bayerische Motoren Werke Aktiengesellschaft, 80809 München (DE)
(72) Erfinder: SCHUMACHER, Hubert, 86179 Augsburg (DE)
(86) Internationale Anmeldenummer: PCT/EP2015/051899
(87) Internationale Veröffentlichungsnummer: WO 2015/121086

(56) Entgegenhaltungen:
- EP-A2- 1 338 446
- DE-A1-102007 060 861
- DE-A1-102009 044 573

## Beschreibung

Die Erfindung betrifft ein Verfahren zum Erkennen des Ausbauens eines in einem Fahrzeug-Reifen verbauten Reifenüberwachungsmoduls zur ReifenDrucküberwachung, welches einen Kraftsensor aufweist sowie reifenspezifische Daten enthalten und diese sowie Angaben zum Reifendruck an eine im Fahrzeug vorgesehene elektronische Recheneinheit übermitteln kann, wobei ein nennenswerter Druckabfall im Reifen als ein Hinweis auf einen möglichen Ausbau des Reifenmoduls berücksichtigt wird. Zum Stand der Technik wird auf die zur Bildung des Oberbegriffs herangezogene DE 10 2007 060 861 A1 und weiterhin auf die DE 10 2009 044 573 A1 sowie die EP 1 338 446 A2 verwiesen.

In moderneren Kraftfahrzeugen sind Reifendruckkontrollsysteme verbaut, um den Fahrer bei Druckabfall zu warnen. Bei den Reifendruckkontrollsystemen unterscheidet man zwischen direkt messenden Systemen, bei denen mittels einer Sensorik im Reifen der Druck gemessen wird und indirekt messenden Systemen, die eine sich mit dem Luftdruck im Reifen ändernde Eigenschaft detektieren. Bei den erstgenannten Systemen ist im Reifen ein Sensor eingebracht, der Druck und Temperatur messen kann und diese Information zusammen mit einer eindeutigen Sensor-Identifikationsnummer an eine im Fahrzeug installierte Überwachungs-Recheneinheit übermittelt, wo diese Information geeignet weiter verarbeitet wird. Die Übermittlung von Informationen vom Rad bzw. Reifen zur fahrzeugfesten Recheneinheit wird dabei mittels standardisierten Funktelegrammen durchgeführt.

Hinsichtlich der besagten Reifendruck-Sensorik kann man zwischen felgenseitig und reifenseitig montierten Sensoren unterscheiden. Felgenseitig montierte Sensoren sind nicht mit dem Reifen verbunden und damit kann der Reifen gewechselt werden, ohne dass der Sensor mit gewechselt wird. Falls zusätzliche Information über Reifeneigenschaften, so bspw. hinsichtlich dessen zulässiger Höchstgeschwindigkeit oder Laufdauer und anderes mehr im Sensor gespeichert ist, wäre diese Information nach einem Reifenwechsel ohne Austausch des felgenseitig montierten Sensors nicht mehr eindeutig. Reifenseitig montierte Sensoren werden üblicherweise im Reifenlatsch befestigt und sind damit eindeutig mit dem Reifen verbunden. Dabei ist der Sensor inklusive zugehöriger Elektronik (auch zum Versenden der genannten Funktelegramme) als eine hier als Reifenüberwachungsmodul bezeichnete Einheit mittels einer Gummihalterung im Reifen gehalten. Zusätzlich bieten solche bekannten Reifenüberwachungsmodule mittels integrierter Piezo-Sensoren (= Kraftmessfühler, der Einfachheit halber auch Kraftsensor genannt) durch den direkten Kontakt mit dem Reifen die Möglichkeit, in den Reifen eingebrachte mechanische Spannungsverläufe zu detektieren, die sich aufgrund der Verbiegungen des Reifen-Innerliners, an welchem der Sensor befestigt ist, insbesondere im Betriebseinsatz des Reifens einstellen. Weiterhin können derartige Reifenüberwachungsmodule reifenspezifische Daten, von denen vorstehend einige beispielhaft genannt wurden, enthalten und ebenso wie die Messwerte für Druck und Temperatur im Reifen sowie ggf. die soeben genannten mechanischen Spannungsverläufe oder auf diesen basierende Auswertegrößen in Funktelegrammen an die fahrzeugfeste Überwachungs-Recheneinheit übermitteln.

Die reifenspezifischen Daten, welche im Reifenüberwachungsmodul gespeichert sind und an die fahrzeugfeste Überwachungs-Recheneinheit übermittelt werden, müssen korrekt sein, d.h. es muss sichergestellt sein, dass eine solche übermittelte reifenspezifische Information eindeutig zum tatsächlich verbauten Reifen gehört. Andererseits ist es erwünscht, bei

Austausch eines Reifens das darin verbaute Reifenüberwachungsmodul weiter verwenden zu können. Folglich gilt es zu verhindern, dass ein bei Austausch eines Reifens aus diesem entferntes Reifenüberwachungsmodul einfach in einem anderen neuen Reifen verbaut wird, ohne zuvor die im Reifenüberwachungsmodul gespeicherten reifenspezifischen Daten des vorhergehenden Reifens zu löschen oder allgemeinen einen Zugriff auf diese "alten" Daten zu verhindern. Idealerweise können in Verbindung mit einem Wiedereinbau eines derartigen gebrauchten Reifenüberwachungsmoduls die reifenspezifischen Daten des neuen Reifens, in welchem dieses Reifenüberwachungsmodul dann verbaut wird, in das Reifenüberwachungsmodul eingespielt werden, jedoch ist dies nicht zwingend erforderlich. Seine wesentliche Funktion, nämlich die Ermittlung des Drucks und der Temperatur der im Reifen enthaltenen Luft kann das Reifenüberwachungsmodul auch ohne reifenspezifische Daten ausführen. Wie bereits erläutert ist es jedoch wesentlich, dass letztere, so sie überhaupt vorhanden sind und an die fahrzeugfeste Überwachungs-Recheneinheit übermittelt werden, korrekt sind. Dabei ist es allemal besser, wenn keine Daten übermittelt werden, als wenn falsche Daten übermittelt werden.

Bekannte Lösungen, die ein Löschen der gespeicherten Information bei Druckverlust bzw. bei "luftleerem" Reifen bewirken (vgl. bspw. die eingangs genannte DE 10 2007 060 861 A1) sind in der Praxis nachteilig, da der drucklose Zustand bei modernen Fahrzeugreifen ein regulärer Betriebszustand sein kann. Bekanntlich existieren sog. runflat-Reifen, mit denen auch bei signifikantem Druckverlust im Reifen eine bestimmte Zeit weitergefahren werden kann. Ein solcher runflat-Reifen, der nur kurzfristig luftleer betrieben wird, kann wieder aufgepumpt und weiterverwendet werden, was folglich auch für das im Reifen verbaute Reifenüberwachungsmodul sowie die darin gespeicherten reifenspezifischen Daten gilt. Deshalb ist das besagte Kriterium eines signifikanten Druckabfalls für ein Löschen oder Sperren der reifenspezifischen Daten in einem Reifenüberwachungsmodul nicht ausreichend.

Bei der eingangs weiterhin genannten DE 10 2009 044 573 A1 wird ein Kraftsensor verwendet, um ein fehlerhaftes Ablösen eines Sensors vom Reifen zu erkennen. Ein vorhergehender Druckabfall wird nicht berücksichtigt; auch erfolgt keine Bewertung hinsichtlich Periodizität des Kraftsensors. Bei der weiterhin genannten EP 1 338 446 A2 wird anhand eines Kraftsensors, welcher an der Felge montiert ist, zwischen einem rotierenden Rad und einem ruhenden Ersatzrad bzw. zwischen einem an einer FahrzeugAchse und einem im Kofferraum des Fahrzeugs liegenden Rad unterschieden.

Zurückkommend auf die oben geschilderte Problematik einer möglichen Mehrfachverwendung eines Reifenüberwachungsmoduls ist es Aufgabe der vorliegenden Erfindung, ein weiteres Kriterium aufzuzeigen, welches sinnvollerweise für ein Sperren oder Löschen der in einem Reifenüberwachungsmodul abgelegten reifenspezifischen Daten verwendet werden kann, weil aus diesem weiteren Kriterium mit sehr hoher Wahrscheinlichkeit auf eine Demontage der Reifenüberwachungsmoduls aus einem Reifen heraus geschlossen werden kann.

Die Lösung dieser Aufgabe ist für ein Verfahren nach dem Oberbegriff des Anspruchs 1 dadurch gekennzeichnet, dass anschließend an einen nennenswerten Druckabfall die Signale des Kraftsensors hinsichtlich Periodizität überwacht werden und dass bei nicht feststellbarer Periodizität auf einen Ausbau des Reifenmoduls geschlossen wird und die reifenspezifischen Daten nicht weiter verfügbar gemacht werden. Beansprucht wird darüber hinaus selbstverständlich ein Reifenüberwachungsmodul, welches mit dem Verfahren nach Anspruch 1 arbeitet.

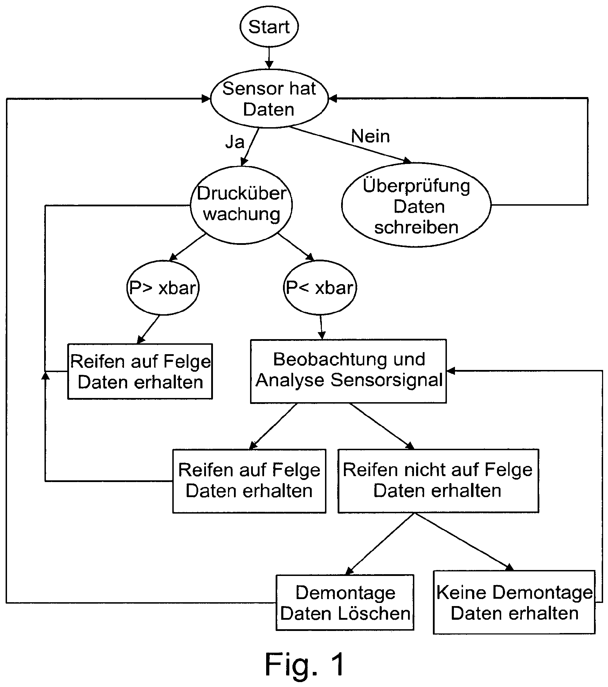

Um sicherzustellen, dass die reifenspezifischen Daten im Reifenüberwachungsmodul korrekt sind, wird eine Überwachung des Zustands dieses Reifenüberwachungsmoduls vorgeschlagen. Diese Überwachung ist eine Prozedur (ein Verfahren) und kann auch als ein "Zustandsautomat" bezeichnet werden, der/die/das im Reifenüberwachungsmodul integriert ist und überwacht, in welcher "Lebensphase" sich das Reifenüberwachungsmodul gerade befindet. In der beigefügten **Figur 1** ist dieser "Zustandsautomat" schematisch dargestellt, wobei dort für den Begriff "Reifenüberwachungsmodul" der Begriff "Sensor" steht, während der in Fig.1 enthaltene Begriff "Sensorsignal" das Signal des im Reifenüberwachungsmodul ("Sensor") enthaltenen Kraftsensors bedeutet.

Ein fabrikneues Reifenüberwachungsmodul (neuer "Sensor") beinhaltet noch keine Daten und hat noch nie einen Druck höher dem atmosphärischen Druck gemessen. Es/er kann beliebig transportiert werden und schließlich in eine reifenseitig montierten Aufnahme eines neuen Reifens eingebracht werden. Nach Montage dieses Reifens auf die Felge wird der Reifen mit Druck beaufschlagt. Damit wird das Reifenüberwachungsmodul aktiviert und kann ab diesem Zeitpunkt die selbständige Überwachung des Reifen-Drucks übernehmen. Solange keine reifenspezifischen Daten im Reifenüberwachungsmodul gespeichert sind, überträgt dieses Reifenüberwachungsmodul den gemessenen Druck und die gemessene Temperatur zusammen mit seiner eindeutigen Identifikationsnummer über ein standardisiertes HF-Funkprotokoll. Damit ist eine Überwachung des Reifendrucks möglich. Dabei werden keine reifenspezifischen Daten übertragen, da solche noch nicht vorliegen.

Zeitlich nachdem im Reifenüberwachungsmodul reifenspezifische Daten gespeichert worden sind, worauf vorliegend nicht weiter eingegangen wird, werden diese reifenspezifischen Daten ebenfalls mittels des standardisierten HF-Funksignals an eine fahrzeugseitige Überwachungs-Recheneinheit übermittelt, ebenso wie diejenigen Telegramme zum Übertragen von Druck und Temperatur, die zur Reifendrucküberwachung benötigt werden. Das Reifenüberwachungsmodul muss nun seine eigene Befestigung im Reifen derart überwachen, dass Änderungen solchermaßen erfasst und bewertet werden, dass ein Entfernen des Moduls aus dem Reifen, d.h. ein Ausbau des Reifenüberwachungsmoduls erkannt wird, woraufhin reifenspezifische Daten zumindest gesperrt und vorzugsweise gelöscht werden, um eine Verwechslung zu verhindern. Solange der gemessene Reifendruck dabei oberhalb eines gewissen Schwellwertes liegt, ist davon auszugehen, dass der Reifen auf der Felge montiert ist und damit ein Entfernen des Sensors nicht erfolgt ist. In diesem Zustand ist folglich keine modulinterne Überwachung hinsichtlich eines Ausbaus (Entfernens) des Reifenüberwachungsmoduls erforderlich.

Größere Druckänderungen im Reifen werden nun wie üblich vom Reifenüberwachungsmodul erkannt. Ist ein solcher größerer bzw. nennenswerter Druckabfall erfolgt, wird erfindungsgemäß eine Überwachung des Spannungsverlaufes des im Reifenüberwachungsmoduls verbauten Kraftsensors (= Piezosensors) in Gang gesetzt, wofür der zeitliche Verlauf der elektrischen Spannung des Signals des Kraftsensors (= des "Sensorsignals") ausgewertet wird. Vorzugsweise wird diese Prozedur unterhalb eines bestimmten Reifendruck-Wertes gestartet. Analysiert wird dabei der Sensorsignal-Verlauf hinsichtlich Periodizität, d.h. eines regelmäßig wiederkehrenden grundsätzlichen Verlaufs, wobei selbstverständlich die Absolutwerte der Sensorsignale nicht völlig identisch sein müssen, um Periodizität zu erkennen; vielmehr ist eine grundsätzliche, prinzipielle Regelmäßigkeit ausreichend. Diese Regelmäßigkeit oder Periodizität sollte dabei innerhalb einer angemessenen Zeitspanne zu beobachten sein, die in der Größenordnung von wenigen mehreren Sekunden bis zu einer Minute liegen kann und typischerweise im Bereich von 10 Sekunden bis zu 30 Sekunden zu erwarten ist.

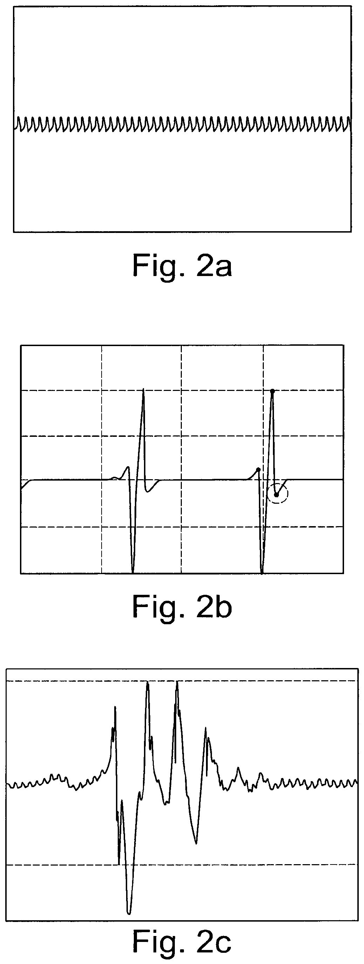

Näher erläutert wird dies nun anhand der beigefügten **Figuren 2a - 2e****,** die jeweils in einem Diagramm über der Zeit (Abszisse) den Verlauf der auf der Ordinate aufgetragenen elektrischen Spannung des Kraftsensors bzw. Piezosensors eines Reifenüberwachungsmoduls für verschiedene BetriebsZustände dieses Reifenüberwachungsmoduls zeigen, wobei ausdrücklich darauf hingewiesen sein, dass die Maßstäbe in den verschiedenen Diagrammen unterschiedlich sind. Vorliegend spielen wie bereits erwähnt Absolutwerte keine Rolle; vielmehr erfolgt - wie erwähnt - eine Überwachung hinsichtlich Periodizität des Spannungssignals.

**Fig.2a** zeigt den Spannungsverlauf am unbewegten Reifenüberwachungsmodul (und folglich auch bei nicht bewegtem Reifen). Man erkennt ein geringes Rauschen, welches über die Zeit gesehen im wesentlichen unverändert (und somit auch periodisch) ist.

**Fig.2b** zeigt einen typischen Spannungsverlauf eines am Fahrzeug montierten bewegten, d.h. sich drehenden Reifens. Man erkennt dabei deutlich den periodischen Latsch-Durchgang.

**Fig.2c** zeigt einen Spannungsverlauf eines nicht am Fahrzeug montierten und dabei irgendwie deformierten Reifens, d.h. hier wird der Reifen beispielsweise von Hand auf dem Boden gerollt oder es wird der Reifen in einer üblichen Maschine von der Felge abgezogen. Erkennbar sind auch hier starke Ausschläge, da der Reifen teilweise stark deformiert wird und sich diese Veränderungen auf den im Reifen über das Reifenüberwachungsmodul montierten Piezosensor auswirken. Erkennbar liegen auch hier periodische Schwingungen vor, die durch die Dämpfung des Reifengummis und das typische Schwingungsverhalten eines Reifenmantels verursacht sind.

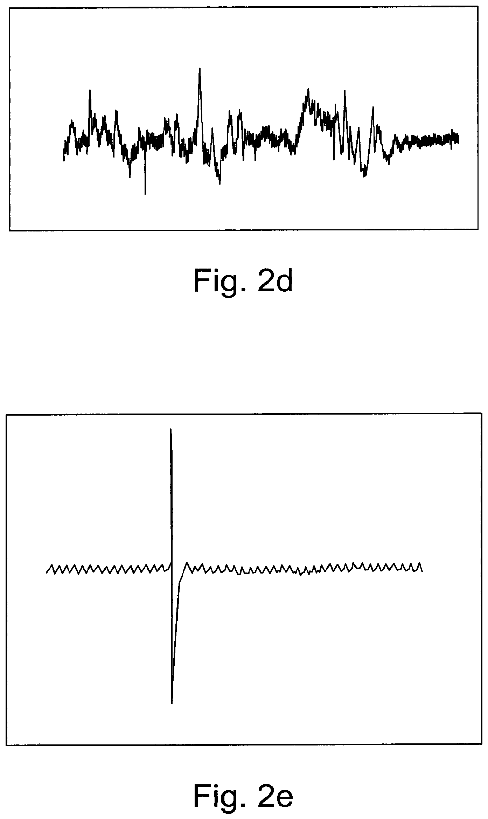

Wird jedoch das Reifenmodul mit dem integrierten Piezosensor aus dem Reifen ausgebaut, so sind im in **Fig.2d** dargestellten elektrischen Spannungsverlauf des Piezosensors völlig unregelmäßige Spannungsausstöße erkennbar, die durch die Arbeiten am Reifenüberwachungsmodul selbst, d.h. durch den Ausbau aus dem Reifen, hervorgerufen sind. Hier sind keine periodischen Spannungsanteile feststellbar.

**Fig.2e** zeigt den Spannungsverlauf des Piezosensors/Kraftsensors eines aus einem Reifen ausgebauten Reifenüberwachungsmoduls beim Ablegen des letzteren auf einem Tisch. Ein einziger Impuls spiegelt dies ohne jegliche Periodizität wieder.

Klar erkennbar ist, dass bereits ein Zustand nach Fig.2d, insbesondere jedoch ein Zustand nach Fig. 2e jedenfalls in Verbindung mit einer vorhergehenden Absenkung des vom Drucksensor (im Zusammenwirken mit dem Temperatursensor) gemessen Drucks (Luftdrucks) nur bedeuten kann, dass das Reifenüberwachungsmodul aus dem Reifen entfernt wurde, wonach ein Zugriff auf die im Reifenüberwachungsmodul hinterlegten reifenspezifischen Daten zu verhindern ist, bspw. indem diese Daten dann selbsttätig gelöscht werden. Danach kann dieses Reifenüberwachungsmodul aber weiterhin verwendet werden, da dieses zumindest die "einfache" Reifendrucküberwachung uneingeschränkt durchführen kann. Darüber hinaus kann vorgesehen sein, dass neue reifenspezifische Daten eines neuen Reifens, in welchen dieses Modul anschließend verbaut wird, in dieses Reifenüberwachungsmodul eingespielt werden.

Durch die beschriebene Vorgehensweise ist eine Lösung beschrieben, mit welcher eine Wiederverwendbarkeit eines Reifenüberwachungsmoduls mit integriertem Kraftsensor (Piezosensor) nach Demontage/Ausbau aus einem Reifen möglich ist, wobei eine Vertauschung von spezifischen Reifendaten ausgeschlossen ist. Dabei bleibt dieses Reifenüberwachungsmodul auch im Falle, dass dieses nicht aus einem Reifen ausgebaut wird, dieser aber einen signifikanten Abfall des Reifen-Innendrucks erfährt, voll funktionsfähig. Trotz einmaligen Druckabfalls im Reifen kann dieser inclusive seines Reifenüberwachungsmoduls somit ohne Einschränkung weiter verwendet werden; insbesondere kann weiterhin eine grundsätzlich vorteilhafte Übermittlung von auf dem Reifenüberwachungsmodul hinterlegten reifenspezifischen Daten an eine fahrzeugfeste Überwachungs-Recheneinheit erfolgen. Letzeres gilt im übrigen für den Fall, dass der Reifen von einer Felge abmontiert wird und danach das Reifenüberwachungsmodul im Reiben verbleibt. Wird dieser Reifen anschließend auf eine neue Felge montiert, bspw. weil die vorhergehende Felge unschöne Kraftspuren aufwies, so kann das Reifenmodul weiterhin vollständig funktionsfähig bleiben. Der letztgenannte Fall ist in Figur 1 im Kästchen rechts unten dargestellt.

## Patentansprüche

1. Verfahren zum Erkennen des Ausbauens eines in einem Fahrzeug-Reifen verbauten Reifenüberwachungsmoduls zur ReifenDrucküberwachung, welches einen Kraftsensor aufweist sowie reifenspezifische Daten enthalten und diese sowie Angaben zum Reifendruck an eine im Fahrzeug vorgesehene elektronische Recheneinheit übermitteln kann, wobei ein nennenswerter Druckabfall im Reifen als ein Hinweis auf einen möglichen Ausbau des Reifenmoduls berücksichtigt wird,
**dadurch gekennzeichnet, dass** anschließend an einen nennenswerten Druckabfall die Signale des Kraftsensors hinsichtlich Periodizität überwacht werden und dass bei nicht feststellbarer Periodizität auf einen Ausbau des Reifenmoduls geschlossen wird und die reifenspezifischen Daten nicht weiter verfügbar gemacht werden.

2. Reifenüberwachungsmodul, welches mit dem Verfahren nach Anspruch 1 arbeitet.

## Claims

1. A method for detecting the dismounting of a tyre monitoring module, installed in a vehicle tyre, for monitoring tyre pressure, which module has a force sensor and contains tyre-specific data and can transmit this and also details relating to the tyre pressure to an electronic computing unit provided in the vehicle, wherein an appreciable pressure drop in the tyre is considered to be an indication of a possible dismounting of the tyre module,
**characterised in that,** following an appreciable pressure drop, the signals of the force sensor are monitored with regard to periodicity, and **in that,** if periodicity cannot be detected, a dismounting of the tyre module is inferred and the tyre-specific data are no longer made available.

2. A tyre monitoring module which works with the method according to claim 1.

## Revendications

1. Procédé pour reconnaître le démontage d'un module de surveillance de pneumatique installé dans un pneumatique de véhicule pour surveiller la pression du pneumatique, et qui comporte un capteur de force ainsi que des données spécifiques au pneumatique et qui peut transmettre ces données ainsi que des indications concernant la pression du pneumatique à un calculateur électronique du véhicule, une chute de pression de valeur significative dans le pneumatique étant prise en compte comme indication traduisant un éventuel démontage du module de surveillance de pneumatique,
procédé **caractérisé en ce qu'**
à la suite d'une chute de pression significative, on surveille la périodicité des signaux du capteur de force et en cas de périodicité qui ne peut se constater, on conclut au démontage du module de pneumatique et on ne continue plus de rendre disponibles les données spécifiques au pneumatique.

2. Module de surveillance de pneumatique appliquant le procédé selon la revendication 1.
